# FASCICULE DE BREVET EUROPEEN

(11) **EP 3 768 736 B1**
(45) Date de publication et mention de la délivrance du brevet: **11.05.2022**
(21) Numéro de dépôt: 19719544.9
(22) Date de dépôt: 18.03.2019
(51) Int. Cl.: C08F 210/02, C08F 236/22, C08F 4/54

(54) **COPOLYMERE D'ETHYLENE ET DE MYRCENE**
COPOLYMER BESTEHEND AUS ETHYLEN UND MYRCEN
ETHYLENE AND MYRCENE COPOLYMER

(30) Priorité: 19.03.2018 FR 1852304
(43) Date de publication de la demande: 27.01.2021
(73) Titulaire: COMPAGNIE GENERALE DES ETABLISSEMENTS MICHELIN, 63000 Clermont-Ferrand (FR)
(72) Inventeur: LAFAQUIERE, Vincent, 63040 CLERMONT-FERRAND Cedex 9 (FR); MORESO, Emma, 63040 CLERMONT-FERRAND Cedex 9 (FR)
(74) Mandataire: Gandon-Pain, Sylvie
(86) Numéro de dépôt international: PCT/FR2019/050597
(87) Numéro de publication internationale: WO 2019/180355

(56) Documents cités:
- FR-A1- 2 179 772
- US-A- 3 480 599
- US-A- 5 837 791
- LAUR, EVA; WELLE, ALEXANDRE; VANTOMME, AURELIEN; BRUSSON, JEAN-MICHEL; CARPENTIER, JEAN-FRANCOIS; KIRILLOV, EVGUENI: "Stereoselective copolymerization of styrene with terpenes catalyzed by an Ansa-lanthanidocene catalyst: access to new syndiotactic polystyrene-based materials", CATALYSTS, vol. 7, no. 12, 27 novembre 2017 (2017-11-27), pages 361/1-361/12, XP002787179, ISSN: 2073-4344, DOI: 10.3390/catal7120361
- LAUR EVA ET AL: "Stereoselective copolymerization of styrene with terpenes catalyzed by an Ansa-lanthanidocene catalyst: access to new syndiotactic polystyrene-based materials", CATALYSTS, M D P I AG, CH , vol. 7, no. 12 27 November 2017 (2017-11-27), pages 1-12, XP009509866, ISSN: 2073-4344, DOI: 10.3390/CATAL7120361 Retrieved from the Internet: URL:https://www.mdpi.com/2073-4344/7/12/36 1

## Description

Le domaine de l'invention est celui des copolymères de diène conjugué et d'éthylène, riches en unité éthylène et utilisables en tant qu'élastomères dans une composition de caoutchouc pour pneumatique.

Les élastomères diéniques les plus largement utilisés dans la confection des pneumatiques sont les polybutadiènes, les polyisoprènes, en particulier le caoutchouc naturel, et les copolymères de 1,3-butadiène et de styrène. Le point commun à ces élastomères est la forte proportion molaire d'unités diéniques dans l'élastomère, généralement très supérieure à 50%, ce qui peut les rendre sensibles à l'oxydation, notamment sous l'action de l'ozone.

La Demanderesse a décrit des élastomères qui a contrario sont relativement pauvres en unités diéniques, notamment en vue de réduire leur sensibilité aux phénomènes d'oxydation. Ces élastomères sont par exemple décrits dans le document WO 2007054223. Ce sont des copolymères de 1,3-butadiène et d'éthylène contenant plus de 50% en mole d'unité éthylène. Ces élastomères sont qualifiés d'élastomères diéniques riches en éthylène.

Les copolymères de 1,3-butadiène et d'éthylène riches en éthylène sont cristallins et voient leur cristallinité augmenter avec le taux d'éthylène. La présence de parties cristallines dans le copolymère peut être problématique lorsqu'on utilise le copolymère dans une composition de caoutchouc. La fusion des parties cristallines du copolymère entraînant une baisse de sa rigidité, une composition de caoutchouc contenant un tel copolymère et utilisée dans un pneumatique voit aussi sa rigidité diminuer lorsqu'elle est portée à des températures égalant ou dépassant la température de fusion des parties cristallines, ce qui peut être le cas pendant les phases répétées de freinage et d'accélération du pneumatique. Cette dépendance de la rigidité en fonction de la température peut donc entraîner des fluctuations non maîtrisées des performances du pneumatique. Il est d'intérêt de disposer de polymères diéniques riches en unités éthylène dont la cristallinité est réduite, voire supprimée.

Dans le document WO 2007054224, la Demanderesse a décrit des copolymères diéniques riches en éthylène qui présentent une cristallinité réduite. Ces copolymères sont des copolymères de 1,3-butadiène et d'éthylène qui contiennent en outre des motifs cycliques hydrocarbonés saturés à 6 membres. Néanmoins, ces copolymères introduits dans une composition de caoutchouc peuvent conférer une rigidité trop élevée à la composition de caoutchouc. La rigidité élevée de la composition de caoutchouc est imputée à une rigidité également élevée de l'élastomère. Une rigidité élevée d'une composition de caoutchouc peut être problématique, car elle peut, elle aussi, rendre la composition de caoutchouc inappropriée pour certaines applications.

Pour produire ces copolymères d'éthylène et de 1,3-butadiène riches en éthylène et comportant des motifs cycliques hydrocarbonés saturés à 6 membres, la Demanderesse a mis au point un système catalytique à base d'un métallocène de formule (I) et d'un organomagnésien, comme cela est décrit par exemple dans le document WO 2007054224,

P(Cp¹)(Cp²)Nd(BH₄)_{(1+y)-}L_{y}-Nₓ (I)

Cp¹ et Cp², identiques ou différents, étant choisis dans le groupe constitué par les groupes fluorényles substitués et le groupe fluorényle non substitué de formule C₁₃H₈, P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle, y, nombre entier, étant égal ou supérieur à 0, x, nombre entier ou non, étant égal ou supérieur à 0, L représentant un métal alcalin choisi dans le groupe constitué par le lithium, le sodium et le potassium, N représentant une molécule d'un éther, de préférence diéthyléther ou tétrahydrofuranne.

Comme chacun le sait, la capacité d'une unité de production d'un polymère donné est liée à la productivité de l'unité de production. Un moyen pour augmenter la productivité d'une unité de production mettant en jeu une polymérisation en présence d'un système catalytique à base d'un métallocène est d'augmenter l'activité catalytique. Ce gain en activité catalytique est donc constamment recherché pour rendre un procédé de synthèse d'un polymère plus productif en vue de minimiser les coûts de production d'une unité de polymérisation et augmenter sa capacité de production.

Poursuivant son but de synthétiser des élastomères diéniques riches en éthylène, la Demanderesse a découvert un nouveau polymère qui permet de résoudre les problèmes mentionnés.

Ainsi un premier objet de l'invention est un copolymère, de préférence élastomère, d'éthylène et de myrcène qui comprend des unités éthylène et des unités myrcène, les unités éthylène représentant entre 50% et 95% en moles des unités éthylène et des unités myrcène, et les unités myrcène de configuration 1,2 et 3,4 représentant plus de 50% en mole des unités myrcène.

Un autre objet de l'invention est un procédé de préparation du copolymère conforme à l'invention.

L'invention concerne aussi une composition de caoutchouc à base au moins de l'élastomère conforme à l'invention et d'un système de réticulation, ainsi qu'un pneumatique qui comprend la composition de caoutchouc conforme à l'invention.

### I. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un copolymère sont exprimés en pourcentage molaire par rapport à la totalité des unités monomères du copolymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le myrcène étant un 1,3 diène substitué, le myrcène peut donner lieu à des unités de configuration 1,2 représentée par la formule (1), de configuration 3,4 représentée par la formule (2) et de configuration 1,4 dont la forme trans est représentée ci-après par la formule (3). Les unités résultant de la polymérisation du myrcène sont dites unités myrcène.

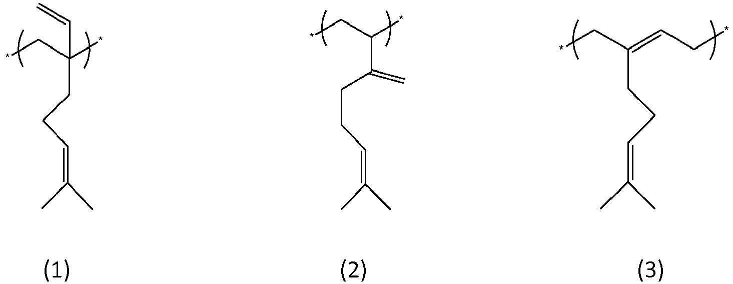

Comme cela est également bien connu, l'unité éthylène est une unité de motif -(CH₂-CH₂)-.

Le copolymère conforme à l'invention est un copolymère d'éthylène et de myrcène, ce qui implique que les unités monomères du copolymère sont des unités résultant de la polymérisation de l'éthylène et du myrcène, à savoir des unités éthylène et des unités myrcène. Le copolymère comprend donc des unités éthylène et des unités myrcène.

Le copolymère d'éthylène et de myrcène conforme à l'invention a pour caractéristique essentielle de comprendre entre 50% et 95% en moles d'unité éthylène. Autrement dit, les unités éthylène représentent entre 50% et 95% en moles des unités éthylène et des unités myrcène. Il a également pour autre caractéristique essentielle de comprendre des unités myrcène qui sont à plus de 50% en mole des unités myrcène de configuration 1,2 et 3,4. En d'autre terme, les unités myrcène qu'elles soient de configuration 1,2 ou 3,4 représentent plus de 50% en mole des unités myrcène. De préférence, les unités myrcène de configuration 1,2 et 3,4 représentent plus de 55% en mole des unités myrcène. Le complément à 100% en mole des unités myrcène dans le copolymère est constitué tout ou partie d'unités myrcène de configuration 1,4. Selon l'un quelconque des modes de réalisation de l'invention, préférentiellement plus de la moitié des unités myrcène de configuration 1,4 sont de configuration 1,4-trans, plus préférentiellement toutes les unités myrcène de configuration 1,4 sont de configuration 1,4-trans.

Selon un mode de réalisation préférentiel de l'invention, dans le copolymère conforme à l'invention, les unités éthylène représentent au moins 60% en mole des unités éthylène et des unités myrcène. De manière plus préférentielle, les unités éthylène représentent de 60 à 90% en mole des unités éthylène et des unités myrcène.

Selon un mode de réalisation plus préférentiel de l'invention, dans le copolymère conforme à l'invention, les unités éthylène représentent au moins 70% en mole des unités éthylène et des unités myrcène. De manière plus préférentielle, les unités éthylène représentent de 70% à 90% en mole des unités éthylène et des unités myrcène.

De préférence, le copolymère conforme à l'invention a une température de transition vitreuse inférieure à -35°C, en particulier comprise entre -70°C et -35°C.

De manière plus préférentielle, le copolymère conforme à l'invention est un élastomère.

Le copolymère conforme à l'invention peut être préparé par un procédé qui comprend la copolymérisation d'éthylène et de myrcène en présence d'un système catalytique à base au moins d'un métallocène de formule (I) et d'un organomagnésien de formule (II)

P(Cp¹Cp²)Nd(BH₄)_{(1+y)-}L_{y}-Nₓ (I)

MgR¹R² (II)

Cp¹ et Cp², identiques ou différents, étant choisis dans le groupe constitué par les groupes fluorényles substitués et le groupe fluorényle non substitué de formule C₁₃H₈.
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

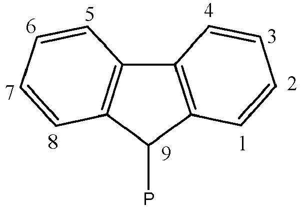

Le système catalytique peut être préparé de façon traditionnelle par un procédé analogue à celui décrit dans la demande de brevet WO 2007054224. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224. Le métallocène peut être préparé de façon traditionnelle par un procédé analogue à celui décrit dans la demande de brevet WO 2007054224, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

De préférence, le métallocène est de formule (Ia), (Ib), (Ic), (Id) ou (Ie) dans lesquelles le symbole Flu présente le groupe fluorényle de formule C₁₃H₈.

[{Me₂SiFlu₂Nd(µ-BH₄)₂Li(THF)}₂] (Ia)

[Me₂SiFlu₂Nd(µ-BH₄)₂Li(THF)] (Ib)

[Me₂SiFlu₂Nd(µ-BH₄)(THF)] (Ic)

[{Me₂SiFlu₂Nd(µ-BH₄)(THF)}₂] (Id)

[Me₂SiFlu₂Nd(µ-BH₄)] (Ie)

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Selon l'un quelconque des modes de réalisation de l'invention, l'incorporation du myrcène et de l'éthylène dans la chaîne polymère en croissance est préférentiellement statistique. Le copolymère conforme à l'invention est avantageusement un copolymère statistique.

Le copolymère conforme à l'invention, en particulier lorsqu'il est élastomère, peut être utilisé dans une composition de caoutchouc.

La composition de caoutchouc, autre objet de l'invention, a pour caractéristique de comprendre l'élastomère conforme à l'invention et un système de réticulation.

Le système de réticulation peut être à base de soufre, de donneurs de soufre, de peroxydes, de bismaléimides ou de leurs mélanges. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Selon un mode de réalisation préférentiel de l'invention, la composition de caoutchouc comprend une charge renforçante. La composition de caoutchouc peut comprendre tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. Le taux de charge renforçante est ajustée par l'homme du métier en fonction de l'usage de la composition de caoutchouc.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Le pneumatique, autre objet de l'invention, comprend la composition de caoutchouc conforme à l'invention définie sous l'un quelconque des modes de réalisation de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

Tous les réactifs sont obtenus commercialement excepté les métallocènes [{Me₂SiFlu₂Nd(µ-BH₄)₂Li(THF)}] et [Me₂SiCpFluNd(µ-BH₄)₂Li(THF)] qui sont préparés selon les modes opératoires décrit dans les demandes de brevet WO 2007054224 et WO 2007054223.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥95%) est obtenu chez Sigma-Aldrich.

### 1) Détermination de la microstructure des polymères :

La caractérisation spectrale et les mesures de la microstructure de copolymère éthylène-myrcène sont réalisées par spectroscopie de Résonance Magnétique Nucléaire (RMN).
- Spectromètre : Pour ces mesures, un spectromètre Bruker Avance III HD 400 MHz est utilisé, équipé d'une sonde Bruker cryo-BBFO z-grad 5 mm.
- Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétition de 128 et un nombre d'incréments de 128. Les expériences sont réalisées à 25 °C.
- Préparation de l'échantillon : 25 mg d'échantillon sont solubilisés dans 1 mL de chloroforme deutéré (CDCl3).
- Calibration de l'échantillon : Les axes des déplacements chimiques ¹H et ¹³C sont calibrés par rapport à l'impureté protonée du solvant (CHCl₃) à δ_{1H} = 7,2 ppm et δ_{13C} = 77 ppm.
- Attribution spectrale : Les signaux des formes d'insertion du myrcène A, B et C (schéma 1) ont été observés sur les différents spectres enregistrés. D'après S. Georges *et al.*, (S. Georges, M. Bria, P. Zinck and M. Visseaux, Polymer 55 (2014) 3869-3878) le signal du groupement -CH= n°8" caractéristique de la forme C présente des déplacements chimiques ¹H et ¹³C identiques au groupement -CH= n°3.

Les déplacements chimiques des signaux caractéristiques des motifs A, B et C sont présentés dans le tableau 1. Les motifs A, B et C correspondent respectivement aux unités de configuration 3,4, de configuration 1,2 et de configuration 1,4-trans.

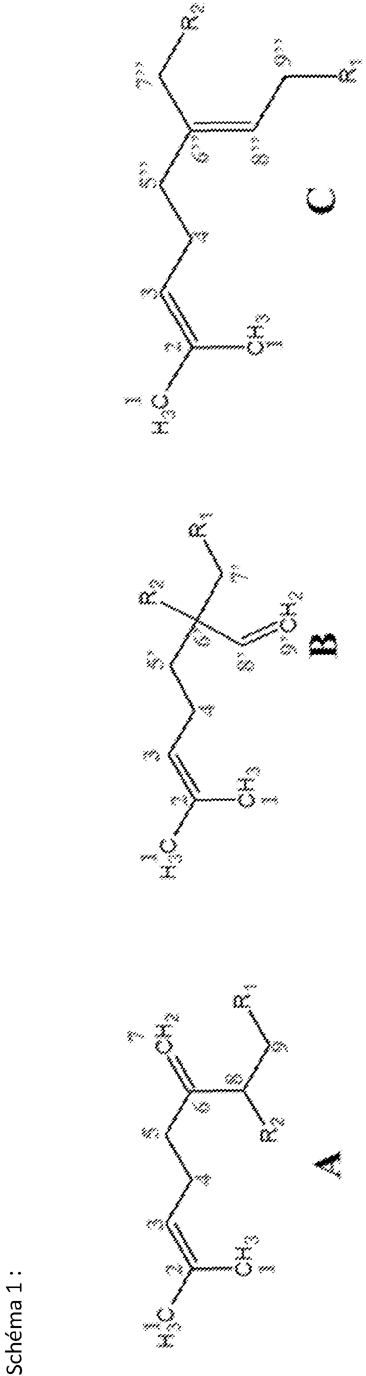

**Tableau 1 : Attribution des signaux ¹H et ¹³C de copolymères Ethylène-Myrcène**

| **δ_{1H} (ppm)** | **δ_{13c} (ppm)** | **Groupement** |
|---|---|---|
| **5.54** | 146.4 | 8' |
| **5.07** | 124.6 | 3 + 8" |
| **4.97 - 4.79** | 112.0 | 9' |
| **4.67** | 108.5 | 7 |
| **2.06** | 26.5 | 4 |
| **2.0-1.79** | 31.8 | 5 + 5' + 5" |
| | 44.5 | 8 |
| **1.59** | 25.9 et 17.0 | 1 |
| **1.2** | 36.8-24.0 | CH₂ éthylène |

Les quantifications ont été effectuées à partir de l'intégration des spectres RMN 1D ¹H à l'aide du logiciel Topspin.

Les signaux intégrés pour la quantification des différents motifs sont :
✔ Ethylène : signal à 1.2 ppm correspondant à 4 protons
✔ Myrcène total : signal n°1 (1.59 ppm) correspondant à 6 protons
✔ Forme A : signal n°7 (4.67 ppm) correspondant à 2 protons
✔ Forme B : signal n°8' (5.54 ppm) correspondant à 1 protons

La quantification de la microstructure est réalisée en pourcentage molaire (% molaire) comme suit : % molaire d'un motif = intégrale 1H d'un motif ^{∗} 100 / Σ (intégrales 1H de chaque motif)

### 2) Détermination de la rigidité des polymères (à cru):

Les mesures sont réalisées sur un rhéomètre Anton Paar modèle MCR301 en mode Cisaillement avec des éprouvettes cylindriques de géométrie maitrisée (épaisseur comprise entre 1,5mm et 3mm et diamètre compris entre 22mm et 28mm). L'échantillon est soumis à une sollicitation sinusoïdale en cisaillement, à une température fixe (correspondant à la fin du passage de la transition vitreuse de l'élastomère sur un balayage en température à 10Hz), et sur une plage fréquentielle allant de 0.01Hz à 100Hz. La valeur de rigidité retenue comme étant la rigidité du plateau caoutchoutique de l'échantillon est la valeur du module de cisaillement G' pour la fréquence à laquelle le module de perte G" atteint son minimum, conformément à la méthode décrite par C. Liu, J. He, E. van Ruymbeke, R. Keunings, C. Bailly, Evaluation of different methods for the determination of the plateau modulus and the entanglement molecular weight, Polymer 47 (2006) 4461-4479.

### 3) Détermination de la température de transition vitreuse des polymères :

La température de transition vitreuse est mesurée au moyen d'un calorimètre différentiel ("Differential Scanning Calorimeter") selon la norme ASTM D3418 (1999).

### 4) Détermination du taux de cristallinité des polymères :

La norme ISO 11357-3 :2011 est utilisée pour déterminer la température et l'enthalpie de fusion et de cristallisation des polymères utilisés par analyse calorimétrique différentielle (DSC). L'enthalpie de référence du polyéthylène est de 277,1 J/g (d'après Handbook of Polymer 4th Edition, J. BRANDRUP, E. H. IMMERGUT, and E. A. GRULKE, 1999)

### 5) Synthèse des polymères :

### 5.1- Synthèse témoin : exemple 1

Le polymère est synthétisé selon le mode opératoire suivant :
Dans un réacteur en verre de 500 ml contenant 300 ml de toluène, on ajoute le co-catalyseur, le butyloctylmagnésium (BOMAG) puis le métallocène [Me₂SiCpFluNd(µ-BH₄)₂Li(THF)]. La durée d'alkylation est de 10 minutes, la température de réaction est de 20 °C. Les quantités respectives des constituants du système catalytique figurent dans le tableau 2. Ensuite, les monomères sont ajoutés selon les proportions respectives indiquées dans le tableau 2, l'éthylène (Eth) et le 1,3-butadiène (Bde) étant sous la forme d'un mélange gazeux. La polymérisation est conduite à 80°C et à une pression d'éthylène constante de 4 bars.

La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 5.2 - Exemple non conforme à l'invention : exemple 2

Le polymère est synthétisé selon le mode opératoire suivant :
Dans un réacteur en verre de 500 ml contenant 300 ml de méthylcyclohexane, on ajoute le co-catalyseur, le butyloctylmagnésium (BOMAG) puis le métallocène [Me₂Si(Flu)₂Nd(µ-BH₄)₂Li(THF)]. La durée d'alkylation est de 10 minutes, la température de réaction est de 20 °C. Les quantités respectives des constituants du système catalytique figurent dans le tableau 2. Ensuite, les monomères sont ajoutés selon les proportions respectives indiquées dans le tableau 2, l'éthylène (Eth) et le 1,3-butadiène (Bde) étant sous la forme d'un mélange gazeux. La polymérisation est conduite à 80°C et à une pression d'éthylène constante de 4 bars.

La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

### 5.3- Exemples conformes à l'invention : exemples 3 à 5

Les polymères sont synthétisés selon le mode opératoire suivant :
Dans un réacteur en verre de 500 ml contenant 300 ml de méthylcyclohexane, on ajoute le co-catalyseur, le butyloctylmagnésium (BOMAG) puis le métallocène [Me₂Si(Flu)₂Nd(µ-BH₄)₂Li(THF)]. La durée d'alkylation est de 10 minutes, la température de réaction est de 20 °C. Les quantités respectives des constituants du système catalytique figurent dans le tableau 2. Ensuite, le myrcène est ajouté dans le réacteur avant l'injection de l'éthylène gazeux. La polymérisation est conduite à 80°C et à une pression d'éthylène constante de 4 bars.

La réaction de polymérisation est stoppée par refroidissement, dégazage du réacteur et ajout de 10 mL d'éthanol. Un anti-oxydant est ajouté à la solution de polymère. Le copolymère est récupéré par séchage en étuve sous vide jusqu'à masse constante. La masse pesée permet de déterminer l'activité catalytique moyenne du système catalytique exprimée en kilogramme de polymère synthétisé par mole de métal néodyme et par heure (kg/mol.h).

Les caractéristiques des polymères figurent dans les tableaux 3 et 4.

### 6) Résultats :

Dans l'exemple 1 (témoin), le copolymère diénique riche en éthylène et synthétisé par polymérisation de l'éthylène et du 1,3-butadiène en présence du métallocène [Me₂SiCpFluNd(µ-BH₄)₂Li(THF)] présente une forte cristallinité (31%) qui peut le rendre inapproprié pour certaines utilisations.

Dans l'exemple 2 (non conforme), le copolymère diénique riche en éthylène synthétisé en présence du métallocène [Me₂Si(Flu)₂Nd(µ-BH₄)₂Li(THF)] présente des motifs cycliques. Bien qu'il contienne un taux d'éthylène comparable à celui du témoin, il n'est pas cristallin. Néanmoins, il a une rigidité relativement élevée qui peut le rendre inapproprié pour certaines utilisations.

Dans les exemples 3 à 5 (conformes), les copolymères diéniques riches en éthylène sont des copolymères d'éthylène et de myrcène. Dans l'exemple 3, le copolymère a un taux d'éthylène comparable à celui des copolymères des exemples 1 et 2, mais sans présenter leurs inconvénients. En effet, il a l'avantage à la fois de ne pas être cristallin et d'avoir une rigidité significativement plus basse que le copolymère de l'exemple 2.

Dans l'exemple 4, le copolymère est bien plus riche en éthylène (85%) que le copolymère témoin de l'exemple 1 (74%) et pourtant il est bien moins cristallin (17%) que le copolymère témoin (31%).

Dans l'exemple 5, le copolymère a un taux de myrcène plus élevé que les copolymères des exemples 3 et 4. Il n'est pas cristallin et présente aussi une rigidité plus faible. Les exemples 3 à 5 illustrent qu'une variation du taux de myrcène dans le copolymère permet d'améliorer le compromis taux de cristallinité rigidité des polymères diéniques riches en éthylène par rapport aux copolymères d'éthylène et de 1,3-butadiène.

Par ailleurs, on note que dans les exemples 3 à 5, l'activité catalytique est supérieure d'au moins d'un facteur 2 à celle de l'exemple 2. De manière surprenante, l'utilisation du myrcène à la place du 1,3-butadiène comme comonomère de l'éthylène permet d'augmenter significativement l'activité catalytique du système catalytique.

En résumé, le remplacement du 1,3-butadiène par le myrcène permet d'une part de synthétiser des polymères diéniques riches en éthylène avec un compromis amélioré entre le taux de cristallinité et la rigidité, d'autre part de rendre le procédé de polymérisation plus productif et d'augmenter ainsi la capacité de production d'une unité de synthèse de polymères diéniques riches en éthylène.

**Tableau 2 :**

| **Exemple** | **Concentration métallocène (mmol/L)** | **Concentration agent alkylant (mmol/L)** | **Quantité de myrcène (mL)** | **Composition mélange gazeux (%mol Eth/Bde)** | **Activité (kg/mol.h)** | **Masse de polymère (g)** |
|---|---|---|---|---|---|---|
| Exemple 1 | 0.32 | 0.97 | 0 | 80/20 | 92 | 12.4 |
| Exemple 2 | 0.16 | 0.78 | 0 | 70/30 | 134 | 12.9 |
| Exemple 3 | 0.16 | 0.78 | 18 | 100/0 | 400 | 17.2 |
| Exemple 4 | 0.16 | 0.78 | 10.3 | 100/0 | 300 | 17.1 |
| Exemple 5 | 0.16 | 0.32 | 50 | 100/0 | 250 | 18.8 |

**Tableau 3 :**

| **Exemples** | **Ethylène (%mol)** | **Butadiène (%mol)** | **1,2-cyclohexanediyle (%mol)** | **Myrcène (%mol)** | **Myrcène 1.4 (%mol / %mol myrcène)** | **Myrcène 1.2 (%mol / %mol myrcène)** | **Myrcène 3.4 (%mol / %mol myrcène)** |
|---|---|---|---|---|---|---|---|
| Exemple 1 | 73.5 | 26.5 | | | | | |
| Exemple 2 | 71 | 16 | 13 | | | | |
| Exemple 3 | 74 | | | 26 | 31 | 4 | 65 |
| Exemple 4 | 85 | | | 15 | 33 | 7 | 60 |
| Exemple 5 | 64 | | | 36 | 31 | 3 | 66 |

**Tableau 4 :**

| Exemples | Tg (°C) | Cristallinité (%) | Rigidité à cru (MPa) |
|---|---|---|---|
| Exemple 1 | -54 | 31 | - |
| Exemple 2 | -35 | 0 | 1 |
| Exemple 3 | -64 | 0 | 0.5 |
| Exemple 4 | -62 | 17 | - |
| Exemple 5 | -58 | 0 | 0.34 |

## Revendications

1. Copolymère d'éthylène et de myrcène qui comprend des unités éthylène et des unités myrcène, les unités éthylène représentant entre 50% et 95% en moles des unités éthylène et des unités myrcène, et les unités myrcène de configuration 1,2 et 3,4 représentant plus de 50% en mole des unités myrcène.

2. Copolymère d'éthylène et de myrcène selon la revendication 1 dans lequel les unités éthylène représentent au moins 60% en mole des unités éthylène et des unités myrcène, préférentiellement de 60 à 90% en mole des unités éthylène et des unités myrcène.

3. Copolymère d'éthylène et de myrcène selon l'une quelconque des revendications 1 à 2 dans lequel les unités éthylène représentent au moins 70% en mole des unités éthylène et des unités myrcène, préférentiellement de 70% à 90% en mole des unités éthylène et des unités myrcène.

4. Copolymère d'éthylène et de myrcène selon l'une quelconque des revendications 1 à 3 dans lequel les unités myrcène de configuration 1,2 et 3,4 représentent plus de 55% en mole des unités myrcène.

5. Copolymère d'éthylène et de myrcène selon l'une quelconque des revendications 1 à 4, lequel copolymère a une température de transition vitreuse inférieure à -35°C, préférentiellement comprise entre -70°C et -35°C.

6. Copolymère d'éthylène et de myrcène selon l'une quelconque des revendications 1 à 5, lequel copolymère est un copolymère statistique.

7. Copolymère d'éthylène et de myrcène selon l'une quelconque des revendications 1 à 6, lequel copolymère est un élastomère.

8. Procédé de préparation d'un copolymère défini à l'une quelconque des revendications 1 à 7, qui comprend la polymérisation d'éthylène et de myrcène en présence d'un système catalytique à base au moins d'un métallocène de formule (I) et d'un organomagnésien de formule (II)
P(Cp¹Cp²)Nd(BH₄)_{(1+y)-}L_{y}-Nₓ (I)
MgR¹R² (II)
Cp¹ et Cp², identiques ou différents, étant choisis dans le groupe constitué par les groupes fluorényles substitués et le groupe fluorényle non substitué de formule C₁₃H₈.
P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0,
L représentant un métal alcalin choisi dans le groupe constitué par le lithium, le sodium et le potassium,
N représentant une molécule d'un éther, de préférence diéthyléther ou tétrahydrofuranne,
R¹ et R², identiques ou différents, représentant un groupe carboné.

9. Procédé selon la revendication 8 dans lequel le métallocène est de formule (la), (Ib), (Ic), (Id) ou (Ie)
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(µ-BH₄)(THF)}₂] (Id)
[Me₂SiFlu₂Nd(µ-BH₄)] (Ie)
le symbole Flu présentant le groupe fluorényle de formule C₁₃H₈.

10. Procédé selon l'une quelconque des revendications 8 à 9 dans lequel R¹ et R² contiennent 2 à 10 atomes de carbone.

11. Procédé selon l'une quelconque des revendications 8 à 10 dans lequel R¹ et R² représentent chacun un alkyle.

12. Procédé selon l'une quelconque des revendications 8 à 11 dans lequel l'organomagnésien est un dialkylmagnésien, de préférence le butyléthylmagnésium ou le butyloctylmagnésium, de manière plus préférentielle le butyloctylmagnésium.

13. Composition de caoutchouc à base au moins d'un copolymère défini à la revendication 7 et d'un système de réticulation.

14. Composition de caoutchouc selon la revendication 13, laquelle comprend une charge renforçante.

15. Pneumatique qui comprend une composition de caoutchouc définie à l'une quelconque des revendications 13 à 14.

## Patentansprüche

1. Copolymer von Ethylen und Myrcen, das Ethylen-Einheiten und Myrcen-Einheiten umfasst, wobei die Ethylen-Einheiten zwischen 50 und 95 Mol-% der Ethylen-Einheiten und Myrcen-Einheiten ausmachen und die Myrcen-Einheiten mit 1,2- und 3, 4-Konfiguration mehr als 50 Mol-% der Myrcen-Einheiten ausmachen.

2. Copolymer von Ethylen und Myrcen nach Anspruch 1, wobei die Ethylen-Einheiten mindestens 60 Mol-% der Ethylen-Einheiten und Myrcen-Einheiten, vorzugsweise 60 bis 90 Mol-% der Ethylen-Einheiten und Myrcen-Einheiten, ausmachen.

3. Copolymer von Ethylen und Myrcen nach einem der Ansprüche 1 bis 2, wobei die Ethylen-Einheiten mindestens 70 Mol-% der Ethylen-Einheiten und Myrcen-Einheiten, vorzugsweise 70 bis 90 Mol-% der Ethylen-Einheiten und Myrcen-Einheiten, ausmachen.

4. Copolymer von Ethylen und Myrcen nach einem der Ansprüche 1 bis 3, wobei die Myrcen-Einheiten mit 1,2- und 3,4-Konfiguration mehr als 55 Mol-% der Myrcen-Einheiten ausmachen.

5. Copolymer von Ethylen und Myrcen nach einem der Ansprüche 1 bis 4, wobei das Copolymer eine Glasübergangstemperatur von weniger als -35 °C, vorzugsweise zwischen -70 °C und -35 °C, aufweist.

6. Copolymer von Ethylen und Myrcen nach einem der Ansprüche 1 bis 5, wobei es sich bei dem Copolymer um ein statistisches Copolymer handelt.

7. Copolymer von Ethylen und Myrcen nach einem der Ansprüche 1 bis 6, wobei es sich bei dem Copolymer um ein Elastomer handelt.

8. Verfahren zur Herstellung eines Copolymers gemäß einem der Ansprüche 1 bis 7, das die Polymerisation von Ethylen und Myrcen in Gegenwart eines katalytischen Systems auf Basis von mindestens einem Metallocen der Formel (I) und einer Organomagnesiumverbindung der Formel (II) umfasst,
P(Cp¹Cp²)Nd(BH₄)_{(1+y)}L_{y}-Nₓ (I)
MgR¹R² (I)
wobei Cp¹ und Cp² gleich oder verschieden sind und aus der Gruppe bestehend aus substituierten Fluorenylgruppen und der unsubstituierten Fluorenylgruppe der Formel C₁₃H₈ ausgewählt sind,
wobei P eine die beiden Gruppen Cp¹ und Cp² verbrückende Gruppe ist und für eine Gruppe ZR³R⁴ steht, wobei Z für ein Silicium- oder Kohlenstoffatom steht und R³ und R⁴ gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist, wobei x ganzzahlig oder nicht ganzzahlig ist und gleich oder größer als 0 ist,
wobei L für ein Alkalimetall, das aus der Gruppe bestehend aus Lithium, Natrium und Kalium ausgewählt ist, steht,
wobei N für ein Molekül eines Ethers, vorzugsweise von Diethylether oder Tetrahydrofuran, steht und
wobei R¹ und R² gleich oder verschieden sind und für eine Kohlenstoffgruppe stehen.

9. Verfahren nach Anspruch 8, wobei das Metallocen die Formel (Ia), (Ib), (Ic), (Id) oder (Ie) aufweist:
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(µ-BH₄)(THF)}₂] (Id)
[Me₂SiFlu₂Nd(µ-BH₄)] (Ie)
wobei das Symbol Flu für die Fluorenylgruppe der Formel C₁₃H₈ steht.

10. Verfahren nach einem der Ansprüche 8 bis 9, wobei R¹ und R² 2 bis 10 Kohlenstoffatome enthalten.

11. Verfahren nach einem der Ansprüche 8 bis 10, wobei R¹ und R² jeweils für ein Alkyl stehen.

12. Verfahren nach einem der Ansprüche 8 bis 11, wobei es sich bei der Organomagnesiumverbindung um eine Dialkylmagnesiumverbindung, vorzugsweise Butylethylmagnesium oder Butyloctylmagnesium, weiter bevorzugt Butyloctylmagnesium, handelt.

13. Kautschukzusammensetzung auf Basis von mindestens einem Copolymer gemäß Anspruch 7 und einem Vernetzungssystem.

14. Kautschukzusammensetzung nach Anspruch 13, die einen verstärkenden Füllstoff umfasst.

15. Reifen, der eine Kautschukzusammensetzung gemäß einem der Ansprüche 13 bis 14 umfasst.

## Claims

1. Copolymer of ethylene and of myrcene which comprises ethylene units and myrcene units, the ethylene units representing between 50 mol% and 95 mol% of the ethylene units and of the myrcene units, and the myrcene units of 1,2 and 3,4 configuration representing more than 50 mol% of the myrcene units.

2. Copolymer of ethylene and of myrcene according to Claim 1, in which the ethylene units represent at least 60 mol% of the ethylene units and of the myrcene units, preferably from 60 mol% to 90 mol% of the ethylene units and of the myrcene units.

3. Copolymer of ethylene and of myrcene according to any one of Claims 1 to 2, in which the ethylene units represent at least 70 mol% of the ethylene units and of the myrcene units, preferably from 70 mol% to 90 mol% of the ethylene units and of the myrcene units.

4. Copolymer of ethylene and of myrcene according to any one of Claims 1 to 3, in which the myrcene units of 1,2 and 3,4 configuration represent more than 55 mol% of the myrcene units.

5. Copolymer of ethylene and of myrcene according to any one of Claims 1 to 4, which copolymer has a glass transition temperature of less than -35°C, preferably of between - 70°C and -35°C.

6. Copolymer of ethylene and of myrcene according to any one of Claims 1 to 5, which copolymer is a statistical copolymer.

7. Copolymer of ethylene and of myrcene according to any one of Claims 1 to 6, which copolymer is an elastomer.

8. Process for the preparation of a copolymer defined in any one of Claims 1 to 7, which comprises the polymerization of ethylene and of myrcene in the presence of a catalytic system based at least on a metallocene of formula (I) and on an organomagnesium compound of formula (II)
P(Cp¹Cp¹)Nd(BH₄)_{(1+y)}-L_{y}-Nₓ (I)
MgR¹R² (II)
Cp¹ and Cp², which are identical or different, being selected from the group consisting of substituted fluorenyl groups and the unsubstituted fluorenyl group of formula C₁₃H₈, P being a group bridging the two Cp¹ and Cp² groups and representing a ZR³R⁴ group, Z representing a silicon or carbon atom, R³ and R⁴, which are identical or different, each representing an alkyl group comprising from 1 to 20 carbon atoms, preferably a methyl,
y, which is an integer, being equal to or greater than 0,
x, which is or is not an integer, being equal to or greater than 0,
L representing an alkali metal selected from the group consisting of lithium, sodium and potassium,
N representing a molecule of an ether, preferably diethyl ether or tetrahydrofuran,
R¹ and R², which are identical or different, representing a carbon group.

9. Process according to Claim 8, in which the metallocene is of formula (Ia), (Ib), (Ic), (Id) or (Ie)
[{Me₂SiFlu₂Nd(µ-BH₄)₂Li(THF)}₂] (Ia)
[Me₂SiFlu₂Nd(µ-BH₄)₂Li(THF)] (Ib)
[Me₂SiFlu₂Nd(µ-BH₄)(THF)] (Ic)
[{Me₂SiFlu₂Nd(µ-BH₄)(THF)}₂] (Id)
[Me₂SiFlu₂Nd(µ-BH₄)] (Ie)
the symbol Flu representing the fluorenyl group of formula C₁₃H₈.

10. Process according to either one of Claims 8 and 9, in which R¹ and R² contain from 2 to 10 carbon atoms.

11. Process according to any one of Claims 8 to 10, in which R¹ and R² each represent an alkyl.

12. Process according to any one of Claims 8 to 11, in which the organomagnesium compound is a dialkylmagnesium compound, preferably butylethylmagnesium or butyloctylmagnesium, more preferentially butyloctylmagnesium.

13. Rubber composition based at least on a copolymer defined in Claim 7 and on a crosslinking system.

14. Rubber composition according to Claim 13, which comprises a reinforcing filler.

15. Tyre which comprises a rubber composition defined in either one of Claims 13 and 14.
